# DEMANDE DE BREVET EUROPEEN

(11) **EP 2 725 074 A1**
(43) Date de publication de la demande: **30.04.2014**
(21) Numéro de dépôt: 13186908.3
(22) Date de dépôt: 01.10.2013
(51) Int. Cl.: C09D 7/12, C09D 11/02, C09D 17/00, C09B 67/46

(54) **Concentrés pigmentaires aqueux à base d'alkylpolyglycosides et de pigments, utilisation comme bases colorantes dans la préparation de compositions de revêtement**

(30) Priorité: 25.10.2012 FR 1260159
(71) Demandeur: Société d'Exploitation de Produits pour les Industries Chimiques SEPPIC, 75007 Paris (FR)
(72) Inventeur: Gayral Chirac, Marie-Françoise, 81290 VIVIERS-LES-MONTAGNES (FR); Triaire, Romain, 92220 BAGNEUX (FR)
(74) Mandataire: Conan, Philippe Claude

(57) **Abrégé**

Concentré (C₂) comprenant pour 100% de sa masse :
- De 30% à 85% massique d'au moins un pigment particulaire solide ;
- De 3% à 10% massique d'un système tensioactif (T_{A}) consistant en une composition (C₁) ou en un mélange de compositions (C₁), ladite composition (C₁) étant représentée par la formule (I):

R₁-O-(G₁)ₚ-H (I)

dans laquelle R₁ représente un radical aliphatique linéaire ou ramifié, saturé ou insaturé, comportant de 8 à 14 atomes de carbone, G₁ représente le reste d'un sucre réducteur et p représente un nombre décimal supérieur ou égal à 1,05 et inférieur ou égal à 5 ;
- Et de 5% à 67% massique d'eau,

étant entendu que la composition (C₂) ne comprend pas de polyéthylène glycol de poids moléculaire moyen supérieur ou égal à 190 g/mol et inférieur ou égal à 700 g/mol ; utilisation dudit concentré comme base colorante de peintures aqueuses et d'encres aqueuses, et procédés pour leur préparation.

## Description

La présente invention concerne de nouveaux concentrés pigmentaires aqueux, destinés à la préparation de formulations colorées utilisées pour le revêtement de surfaces dures, comme les peintures, les laques ou les vernis, ou d'encres destinées à l'impression de supports textiles ou papiers.

Un concentré pigmentaire comprend des pigments particulaires solides de nature organique ou inorganique, dispersés dans un fluide comprenant au moins un solvant en tant que véhicule porteur, et au moins un agent dispersant et/ou un agent mouillant destiné à favoriser sa stabilité. Il permet d'apporter une coloration et/ou une opacité et/ou de la blancheur et/ou de la brillance et/ou de la matité à la formulation qui le contient. Selon les ingrédients présents, il peut également conférer des propriétés de résistance à la corrosion et/ou thermique et/ou mécanique et/ou électrique aux couches de revêtement résultant de l'application de la formulation le comprenant, sur la surface à revêtir.

Les pigments, qui sont des substances solides généralement sous la forme de fines particules, ont été à l'origine dispersés dans des solvants apolaires de nature organique. Cependant pour diminuer la présence de composés organiques volatiles, de nombreux développements techniques ont été réalisés pour substituer ces solvants apolaires organiques par de l'eau en présence d'agents dispersants et/ou d'agents mouillants.

Ces agents dispersants sont des substances ou des compositions qui permettent de stabiliser les particules solides dans le milieu de dispersion, soit par effet stérique soit par effet électrostatique. Ils réduisent ainsi le risque de floculation des pigments. Ce sont généralement des polyélectrolytes de masse moléculaire élevée, portant un grand nombre de charges électriques sur la chaîne latérale du squelette polymérique, comme les polyphosphates ou les acides polycarboxyliques.

Quant aux agents mouillants utilisés dans la préparation de concentrés pigmentaires aqueux il s'agit d'agents tensioactifs qui, du fait de la nature amphiphile de leurs structures, adsorbent sur la surface des pigments hydrophobes et tout en ayant une affinité avec l'eau. On distingue les agents mouillants de nature anionique, comme les tensioactifs possédant dans leur structure des fonctions carboxylate, sulfates ou sulfonate, les agents mouillants de nature cationique, possédant dans leur structure des fonctions ammonium quaternaire, et les agents mouillants de nature non ionique comme les acides gras oxy-éthylénés, les alcools gras oxy-éthylénés, les alkylphénols oxy-éthylénés, les alcools gras alcoxylés comprenant à la suite de la chaîne alkyle des enchaînements de blocs provenant de l'oxyde de styrène, de l'oxyde d'éthylène, et optionnellement de l'oxyde de propylène et de l'oxyde de butylène, comme ceux décrits dans les demandes internationales respectivement publiées sous les numéros WO2007/077045, WO2007/077047, WO2006/097378 et WO2006/097379.

le brevet US 6,312,53 B1 divulgue des concentrés pigmentaires comprenant des dimerdiols comprenant trente-six à quarante-quatre atomes de carbone poly-éthoxylés avec de 1 à 200 moles d'oxyde d'éthylène et comme tensioactifs des alkylpolyglycosides.

La demande de brevet européen publiée sous le numéro EP 0 585 571 A1 divulgue des concentrés pigmentaires aqueux comprenant des polyéthylèneglycols (PEG) de poids moléculaires compris entre 190 g.mol⁻¹ et 700 g.mol⁻¹ utilisés comme agent dispersant et/ou stabilisant, et des alkylpolyglycosides dont la chaîne alkyle est constitué par un radical aliphatique comprenant de 8 à 30 atomes de carbone utilisés comme agent mouillant. Bien qu'ils ne soient pas considérés comme des produits chimiques toxiques, ces PEG irritent la peau et ils participent à l'augmentation de la viscosité des concentrés pigmentaires ; phénomène accru lorsqu'une concentration en pigments élevée est recherchée dans le concentré pigmentaire, car elle nécessite une augmentation corrélative de la concentration en PEG. Or, une trop grande viscosité nuit à la bonne utilisation du concentré pigmentaire.

Il existe donc un besoin de disposer d'un concentré pigmentaire aqueux :
- qui reste homogène après une période de stockage prolongée
- qui contienne une quantité élevée en pigments, tout en se caractérisant par un niveau de viscosité permettant sa manipulation aisée à température ambiante,
- et qui soit exempt de dérivés organiques volatils et irritants pour l'organisme humain.

Pour pallier aux inconvénients exposés ci-dessus, les inventeurs se sont donc attachés à développer un concentré pigmentaire aqueux exempt de tout polyéthylène glycols et de tout dérivé de polyéthylène glycols, et comportant de l'eau, des pigments et des alkylpolyglycosides.

C'est pourquoi l'invention a pour un concentré (C₂) comprenant pour 100% de sa masse :
- De 30% à 85% massique d'au moins un pigment particulaire solide ;
- De 3% à 10% massique d'un système tensioactif (T_{A}) consistant en une composition (C₁) ou en un mélange de compositions (C₁), ladite composition (C₁) étant représentée par la formule (I) :

   R₁-O-(G₁)ₚ-H (I)
dans laquelle R₁ représente un radical aliphatique linéaire ou ramifié, saturé ou insaturé, comportant de 8 à 14 atomes de carbone, G₁ représente le reste d'un sucre réducteur et p représente un nombre décimal supérieur ou égal à 1,05 et inférieur ou égal à 5, ladite composition (C₁) consistant en un mélange de composés représentés par les formules (I₁), (I₂), (I₃), (I₄) et (I₅) :

R1-O-(G₁)₁-H (I₁)

R1-O-(G₁)₂-H (I₂)

R1-O-(G₁)₃-H (I₃)

R1-O-(G₁)₄-H (Ia)

R1-O-(G₁)₅-H (I₅),

dans les proportions molaires respectives a₁, a₂, a₃, a₄ et a₅, telles que la somme a₁+ a₂ + a₃ + a₄ + a₅ est égale à 1 et que la somme a₁ + 2a₂ + 3a₃ + 4a₄ + 5a₅ est égale à p ;
- Et de 5% à 67% massique d'eau,
étant entendu que la composition (C₂) ne comprend pas de polyéthylène glycol de poids moléculaire moyen supérieur ou égal à 190g/mol et inférieur ou égal à 700g/mol et que la composition (C₂) ne comprend pas d'alcoxylate de dimerdiol.

Dans le cadre de la présente invention, les pigments particulaires solides, sont généralement des poudres. Ils sont de nature inorganique ou organique.

Parmi les pigments particulaires solides de nature inorganique, il y a par exemple le dioxyde de titane, utilisé pour son pouvoir opacifiant élevé et sa stabilité chimique, l'oxyde de zinc, utilisé pour son pouvoir opacifiant, et sa capacité filtrer le rayonnement Ultra-violet, le noir de carbone ; l'oxyde de fer (II) ou oxyde ferreux, l'oxyde de fer (III) ou oxyde ferrique, comme l'ocre jaune (PY43), l'ocre rouge (PR102), la terre de Sienne (PBr7), la terre d'ombre (PBr7) ; l'oxyde de fer micacé ; l'orthophosphate de zinc ; le métaborate de baryum ; le molybdate de zinc ; le chromate de zinc ; le tétraoxychromate de zinc ; la ferrite de calcium ; l'aluminium ; l'argent ; le zinc ; l'oxychlorure de bismuth ; le mica-titane ; les nacres blanches ; les nacres irisées ou les nacres colorées à base de mica, de titane, et d'oxyde de fer.

Parmi les pigments particulaires solides de nature organique, il y a par exemple les dérivés de phtalocyanine comme les bleus de phtalocyanine (CI 15 et CI 16), plus particulièrement la phtalocyanine de cuivre (CI 15), les verts de phtalocyanine (CI 7, CI 36 et CI 37) et plus particulièrement la phtalocyanine de cuivre halogénée (CI 36) ; les dérivés d'aniline comme le noir d'aniline (CI 1) ; les dérivés de pérylène, comme les rouges de pérylène (CI 123, CI 149, CI 179 et CI 190) ; les dérivés d'anthraquinone, comme les jaunes d'anthraquinone (CI 24 et CI 108) ; Les dérivés azoïques comme ceux de couleur jaune (CI 1, CI 3, CI 10, CI 73, CI 74, CI 97, CI 105 et CI 111) ; Les dérivés de carbazole ; ou les dérivés de quinacridone.

Par alcoxylate de dimerdiol, on désigne les produits de l'addition de une à deux cents moles d'oxyde d'éthylène et/ou d'oxyde de propylène sur des dimerdiols comprenant de trente-six à quarante quatre atomes de carbone. ces dimerdiols sont des composés disponibles dans le commerces et ils peuvent être obtenus par dimérisation d'acide gras insaturés, tels que les acides oléiques linoléiques ou érucique, suivi d'une réduction en alcools correspondants.

Par sucre réducteur, on désigne dans la définition de la composition (C₁) représentée par la formule (I), les dérivés saccharidiques qui ne présentent pas dans leurs structures de liaison glycosidique établie entre un carbone anomérique et l'oxygène d'un groupement acétal tels qu'ils sont définis dans l'ouvrage de référence : « Biochemistry », Daniel Voet/Judith G. Voet, p. 250, John Wyley & Sons, 1990. La structure oligomérique (G₁)ₚ, peut se présenter sous toutes formes d'isoméries, qu'il s'agisse d'isomérie optique, d'isomérie géométrique ou d'isomérie de position ; elle peut aussi représenter un mélange d'isomères.

Dans la formule (I) telle que définie ci-dessus, le groupe R₁ est lié à G₁ par le carbone anomérique du reste saccharide, de manière à former une fonction acétal. Par radical aliphatique hydrocarboné, saturé ou insaturé, linéaire ou ramifié, comportant de 8 à 14 atomes de carbone, on désigne notamment pour R₁ :
- Les radicaux alkyles linéaires, par exemple les radicaux de formule n-C₈H₁₇- (n-octyle), n-C₁₀H₂₁- (n-décyle), n-C₁₂H₂₅- (n-dodécyle) ou n-C₁₄H₂₉- (n-tétradécyle) ;
- Les radicaux alkyles ramifiés issus des isoalcanols de formule (1) :

   (CH₃)(CH₃)CH-(CH₂)ᵣ-CH₂-OH (1)

   dans laquelle r représente un nombre entier compris entre 4 et 10, par exemple les radicaux isooctyle, isononyle, isodécyle, isoundécyle, isododécyle, isotridécyle ou isotétradécyle ;
- Le radical C₄H₉-CH(C₂H₅)-CH₂- (2-éthyl hexyle) ou les radicaux alkyles ramifiés issus des alcools de Guerbet de formule (2) :

   CH(CₛH₂ₛ₊₁)(CₜH₂ₜ₊₁)-CH₂-OH (2)

   dans laquelle t représente un nombre entier compris entre 2 et 10, s représente un nombre entier compris entre 2 et 10, étant entendu que la somme s + t est supérieure ou égale à 6, et inférieure ou égale à 12, par exemple les radicaux 2-éthyl décyle, 2-butyl octyle, 2-éthyl dodécyle, 2-butyl décyle, 2-hexyl octyle, 2-butyl décyle, 2-butyl décyle ;
- Les radicaux issus des homologues d'alcools de Guerbet, par exemple le radical 2-propyl heptyle ;
- Les radicaux linéaires insaturés tels que les radicaux undécènyle, dodécènyle ou tétradécènyle, par exemple les radicaux 10-undécènyle, 4-dodécènyle, ou 5-dodécènyle ;

Selon un aspect particulier, le concentré (C₂) tel que défini précédemment et objet de l'invention comprend pour 100% de sa masse :
- de 35% à 80% massique d'au moins un pigment particulaire solide,
- de 3% à 10% massique d'un système tensioactif (T_{A}) consistant en une composition (C₁) ou en un mélange de compositions (C₁) telle que définie ci-dessus,
- de 10% à 62% massique d'eau.

Selon un aspect encore plus particulier, le concentré (C₂) tel que défini précédemment et objet de l'invention comprend pour 100% de sa masse :
- de 35% à 70% massique d'au moins un pigment particulaire solide,
- de 3% à 10% massique d'un système tensioactif (T_{A}) consistant en une composition (C₁) ou en un mélange de compositions (C₁) telle que définie ci-dessus,
- de 20% à 62% massique d'eau.

Selon un aspect particulier, l'invention a pour objet un concentré (C₂) tel que défini précédemment, caractérisé en ce que dans la formule (I), ledit reste G₁ est choisi parmi les restes du glucose, du dextrose, du saccharose, du fructose, de l'idose, du gulose, du galactose, du maltose, de l'isomaltose, du maltotriose, du lactose, du cellobiose, du mannose, du ribose, du xylose, de l'arabinose, du lyxose, de l'allose, de l'altrose, du dextrane ou du tallose.

Selon un aspect plus particulier, l'invention a pour objet un concentré (C₂) tel que défini précédemment, caractérisé en ce que dans la formule (I) ledit reste G₁ est choisi parmi les restes du glucose, du xylose et de l'arabinose, et p représente un nombre décimal supérieur ou égal à 1,05 et inférieur ou égal à 2,5, notamment supérieur ou égal à 1,05 et inférieur ou égal à 2,0 et encore plus particulièrement supérieur ou égal à 1,25 et inférieur ou égal à 2,0.

Selon un autre aspect particulier, l'invention a pour objet un concentré (C₂) tel que défini précédemment, caractérisé en ce que dans la formule (I) R₁ est choisi parmi les radicaux (2-éthyl) hexyle, n-octyle, n-décyle, n-dodécyle ou n-tétradécyle.

Selon cet aspect, l'invention a tout particulièrement pour objet un concentré (C₂) tel que défini précédemment, caractérisé en ce que le système tensioactif (T_{A}) consiste pour 100% de sa masse en un mélange :
- De 40% à 60% massique d'une composition (C₁) représentée par la formule (I) dans laquelle R₁ représente le radical n-octyle,
- De 60% à 40% massique d'une composition (C₁) représentée par la formule (I) dans laquelle R₁ représente le radical n-décyle.

Selon un aspect particulier, l'invention a pour objet un concentré (C₂) tel que défini précédemment, dans lequel le pigment particulaire solide est un pigment organique et plus particulièrement, un pigment organique choisi parmi les éléments du groupe constitué par les dérivés de phtalocyanine, les dérivés de pérylène, les dérivés d'anthraquinone et les dérivés azoïques.

Selon un autre aspect particulier, l'invention a pour objet un concentré (C₂) tel que défini précédemment, pour lequel le pigment particulaire solide est un pigment inorganique et plus particulièrement, un pigment inorganique choisi parmi les éléments du groupe constitué par le dioxyde de titane, l'oxyde de zinc, l'oxyde de fer (II) et l'oxyde de fer (III).

L'invention a plus particulièrement pour objet un concentré (C₂) tel que défini précédemment, caractérisé en ce que la surface spécifique dudit pigment particulaire solide est supérieure ou égale à 10,0m²/g et inférieure ou égale à 150,0m²/g, de façon encore plus particulière, inférieure ou égale à 100,0m²/g, et tout particulièrement, inférieure ou égale à 50 m²/g.

La surface spécifique dudit pigment particulaire solide ainsi caractérisé, est déterminée par la méthode de Brunauer, Emmet et Teller (ou méthode dite BET) et consiste à mesurer la quantité d'azote adsorbée par ledit pigment particulaire solide, en fonction de la pression appliquée sur la surface dont on cherche à déterminer l'aire spécifique. La quantité adsorbée d'azote est calculée par différence entre le flux entrant et le flux sortant à la température d'ébullition de l'azote liquide, en fonction de la concentration initiale d'azote. La méthode BET est mise en oeuvre avec des dispositifs de mesure connus de l'homme du métier, par exemple l'appareil Gemini 2375™ commercialisé par la société Micromeritics, équipé d'un stand de conditionnement d'échantillons de marque Micromeritics FloxPrep 060™, ou encore l'analyseur « SA 3100™ BET (Surface Area and Pore Size Analyzer) » commercialisé par la société Beckman Coulter Inc.

Selon un autre aspect particulier, l'invention a pour objet un concentré (C₂) tel que défini précédemment, caractérisé en ce que la masse volumique dudit pigment particulaire solide est supérieure ou égale à 1,1g/cm³ et inférieure ou égale à 4,5g/cm³, plus particulièrement supérieure ou égale à 1,25g/cm³ et inférieure ou égale à 2,0g/cm³ et tout particulièrement supérieure ou égale à 1,3g/cm³ et inférieure ou égale à 1,8g/cm³.

La masse volumique dudit pigment particulaire solide ainsi caractérisé, est déterminée à une température de 20°C, à la pression atmosphérique normale (101.325Pa), à l'aide d'un pycnomètre, selon les méthodes conventionnelles connues de l'homme du métier, comme la norme NF EN ISO 787 du 10 octobre 1995.

Selon un autre aspect particulier, l'invention a pour objet un concentré (C₂) tel que défini précédemment, caractérisé en ce que sa viscosité dynamique mesurée au moyen d'un viscosimètre Brookfield LVT à une vitesse de 60 tours par minute et à une température de 20°C est supérieure ou égale à 50mPas et inférieure ou égale à 2.000mPas, plus particulièrement supérieure ou égale à 100mPas et inférieure ou égale à 2.000mPas, tout particulièrement supérieure ou égale à 200mPas et inférieure ou égale à 2.000mPas et notamment supérieure ou égale à 500mPa.s et inférieure ou égale à 2.000 mPas.

Le concentré (C₂) objet de la présente invention comporte optionnellement des ingrédients auxiliaires habituellement mis en oeuvre dans le domaine de la préparation des concentrés pigmentaires colorés, comme des agents anti-mousses qui ont pour fonction d'éviter la formation de mousse lors de la fabrication et de l'utilisation dudit concentré (C₂), des agents de conservation qui ont pour fonction de prévenir la contamination bactérienne ou fongique dudit concentré (C₂) et/ou des agents de charge qui ont pour fonction de modifier certaines caractéristiques mécaniques, chimiques ou rhéologiques dudit concentré (C₂).

Comme exemples d'agents anti-mousses il y a notamment les dérivés d'huiles de silicone, tels que les polyméthylsiloxanes ou les polysiloxanes modifiés par des polyéthers.

Comme exemples d'agents de conservation il y a le pentachlorophénate de sodium, le pentachlorophénol, le chloracétamide, les dithiocarbamates, les dérivés chlorés ou fluorés de thiophtalimide, les dérivés d'isothiazolinone, les dérivés générant la formation de formol *in-situ,* le 4-hydroxy benzoate de benzyle, le phénoxyéthanol, le phenoxy propanol ou les para-hydroxy benzoate d'alkyle comme le 4-hydroxy benzoate de méthyle, le 4-hydroxy benzoate d'éthyle, le 4-hydroxy benzoate de propyle, le 4-hydroxy benzoate d'isopropyle, le 4-hydroxybenzoate de butyle et le 4-hydroxy benzoate d'isobutyle,

Les agents de charge optionnellement mis en oeuvre dans ledit concentré (C₂) sont des solides pulvérulents de granulométrie supérieure au dit pigment particulaire solide, d'origine minérale, de couleur blanche et insoluble dans l'eau, et n'ayant pas ou peu de pouvoir opacifiant. Comme exemples d'agents de charge il y a les sulfates insolubles dans l'eau tels que le sulfate de baryum, les carbonates insolubles dans l'eau tels que le carbonate de calcium, la silice, les silicates tel le silicate de calcium ou encore le kaolin, le talc, les micas ou la bentonite.

Les compositions (C₁), représentées par la formule (I) telle que définie précédemment, sont préparées par réaction d'un sucre réducteur avec un excès d'alcool de formule (II) :

R₁-OH (II)

dans laquelle R₁ est tel que défini précédemment ou un excès d'un mélange d'alcools de formule (II). Cette réaction est généralement mise en oeuvre dans un réacteur en présence d'un système catalytique acide, en maîtrisant le rapport stoechiométrique entre les deux réactants, soumis à une agitation mécanique, dans des conditions de température et de vide partiel prédéterminées, comme à une température comprise entre 70°C et 130°C et sous un vide partiel compris entre 3x10⁴Pa (300 mbar) et 2x10³Pa (20mbar). Par système catalytique acide, on désigne les acides forts comme l'acide sulfurique, l'acide chlorhydrique, l'acide phosphorique, l'acide nitrique, l'acide méthanesulfonique, l'acide (para-toluène) sulfonique, l'acide (trifluorométhane) sulfonique, ou les résines échangeuses d'ions. L'alcool de formule (II), ou le mélange d'alcools de formule (II), n'ayant pas réagi est éliminé selon des méthodes connues de l'homme du métier comme, la distillation, la distillation dur film à couche mince, la distillation moléculaire ou l'extraction par solvants. Un tel procédé de préparation peut être complété, si nécessaire ou si désiré, par des opérations de neutralisation, de filtration et de décoloration.

Lorsque le système tensioactif (T_{A}) consiste en une composition (C₁) représentée par la formule (I) telle que définie précédemment, son mode de préparation consiste à mettre en oeuvre le mode de préparation de la composition (C₁) tel que défini précédemment.

Lorsque le système tensioactif (T_{A}) consiste en un mélange de compositions (C₁) représentées par la formule (I) telle que définie précédemment, un premier mode de préparation dudit système tensioactif (T_{A}) consiste à introduire un mélange de compositions (C₁), selon un rapport massique maîtrisé, et à soumettre ce mélange à une agitation mécanique efficace, dans des conditions de température permettant d'assurer l'homogénéité du mélange.

Lorsque le système tensioactif (T_{A}) consiste en un mélange de compositions (C₁) représentées par la formule (I) telle que définie précédemment, un deuxième mode de préparation dudit système tensioactif (T_{A}) consiste à préparer :
- Lors d'une première étape a'), une composition (C₁) par réaction d'un sucre réducteur avec un excès d'un mélange d'alcool de formule (II) telle que définie précédemment ;
- Et si nécessaire, lors d'une étape b'), à distiller partiellement, selon des méthodes connues de l'homme du métier, le mélange d'alcools de formule (II) n'ayant pas réagis à l'issue de l'étape a').

L'étape a' est généralement mise en oeuvre dans un réacteur en présence d'un système catalytique acide, tel que défini précédemment, en maîtrisant le rapport stoechiométrique entre les réactants, soumis à une agitation mécanique, dans des conditions de température et de vide partiel prédéterminées, comme à une température comprise entre 70°C et 130°C et sous un vide partiel compris entre 3x10⁴Pa (300 mbar) et 2x10³Pa (20mbar).

Un tel procédé de préparation peut être complété, si nécessaire ou si désiré, par des opérations de neutralisation, de filtration et de décoloration.

Le concentré (C₂) objet de la présente invention est préparé selon les procédés connus de l'homme du métier, comprenant :
- Une étape a) de mélange de l'eau, du système tensioactif (T_{A}) et des dits ingrédients auxiliaires optionnellement présents, dans un disperseur de dimensions adaptées et muni d'un agitateur mécanique de type rotor-stator ;
- Une étape b) d'ajout de la quantité souhaitée du pigment particulaire solide sur le mélange obtenu à l'issue de l'étape a), à une température de 20°C, sous agitation à une vitesse d'agitation comprise entre 500 et 1000 tours/minute ; et si nécessaire
- Une étape c) de broyage du mélange obtenu à l'issue de l'étape b) de façon à atteindre une finesse des particules dispersées inférieure ou égale à 10 micromètres, mesurée par le moyen d'une jauge de North, selon les recommandations de la norme ISO 1524 2000.

Dans le procédé tel que défini ci-dessus, l'étape a) de mélange est couramment réalisée à une température de 20°C et la vitesse de mélange est comprise entre 500 et 2000 tours/minute ; l'étape b) est généralement effectuée à une température de 20°C, sous agitation à une vitesse d'agitation comprise entre 500 et 1000 tours/minute; et l'étape c) optionnelle de broyage est généralement réalisée soit en lots soit en circulation ou en continu à l'aide des différents outils de broyage connus de l'homme du métier, comme les broyeurs à billes ou les broyeurs à disques ou les broyeurs à boulets ou les broyeurs cryogéniques. L'invention a aussi pour objet l'utilisation d'un concentré (C₂) tel que défini précédemment, comme base colorante pour préparer des matériaux de revêtement de surfaces dures, de supports textiles ou de supports en papier.

Par « base colorante », on désigne dans l'utilisation objet de la présente invention, la fonction technique visant à conférer auxdits matériaux de revêtement comprenant ledit concentré (C₂) tel que défini précédemment des propriétés décoratives, et plus particulièrement une coloration et/ou une opacité et/ou de la blancheur et/ou de la brillance et/ou de la matité.

L'opacité est la propriété d'un matériau consistant à diminuer sensiblement ou à ne pas permettre la transmission de la lumière, telle que définie dans la norme NF EN ISO 6504 du 3 mai 2007. Dans le cas d'un matériau de revêtement, le pouvoir opacifiant qui lui est associé peut être considéré comme un pouvoir couvrant, susceptible de conférer à un film dudit matériau appliqué sur un support une aptitude à masquer la nuance ou la couleur ou les contrastes de la couleur initialement présente sur ledit support. L'opacité est conférée par des pigments dont l'indice de réfraction, mesuré à 20°C pour la raie D du sodium, est supérieur ou égal à 1,8.

La brillance est la capacité d'une surface à réfléchir la lumière sans la diffuser, telle que définie dans la norme NF EN ISO 2813 de septembre 1999. Dans le cas d'un matériau de revêtement, les propriétés de brillance qui lui sont associées peuvent être considérées comme celles susceptibles à conférer à un film dudit matériau, appliqué sur un support, des propriétés de réflexion de la lumière sans toutefois la diffuser. Par opposition, la matité est la capacité d'une surface à réfléchir la lumière d'une façon faible. Dans le cas d'un matériau de revêtement, les propriétés de matité qui lui sont associées peuvent être considérées comme celles susceptibles à conférer à un film dudit matériau, appliqué sur un support, de faibles propriétés de réflexion de la lumière.

Par « matériaux de revêtement », on désigne dans l'utilisation objet de la présente invention, les matériaux destinés à recouvrir une surface dans l'objet de la solidifier, de la protéger ou de la décorer. De façon plus particulière, cette expression désigne dans l'utilisation objet de la présente invention, les matériaux comprenant ledit concentré (C₂) destinés à décorer les surfaces sur lesquelles lesdits matériaux sont appliqués. L'expression « matériaux de revêtement » désigne plus particulièrement, les peintures et les encres.

Selon un aspect particulier, l'invention a pour objet l'utilisation d'un concentré (C₂) tel que défini précédemment comme base colorante pour préparer des peintures et des encres, destinées à être appliquées sur des surfaces dures, sur des supports textiles ou sur des supports en papier.

Par « surface dures », on désigne dans l'utilisation objet de la présente invention, par exemple les sols, les murs, les plafonds, les façades et autres surfaces architecturales qu'elles soient intérieures ou extérieures, les huisseries, les véhicules (automobiles, moto, camions,...), les appareils d'électroménagers, les tuyaux, des câbles, des cuves de stockage, de la vaisselle, des carreaux de fenêtre, les carrelages. Les matériaux constituant ces surfaces dures sont par exemple le ciment, le plâtre, le béton, le bois, le verre (sodocalcique, fluorocalcique, borosilicate, cristal), la porcelaine, la faïence, la céramique, les métaux comme l'acier, l'acier inoxydable, l'argent, le cuivre, l'aluminium, le fer, la vitrocéramique, les résines synthétiques, les plastiques à base de polycarbonate, les polypropylènes, les polyéthylènes, les polytéréphtallates.

Par « support textile », on désigne dans l'utilisation objet de la présente invention, les supports constitués de fibres textiles synthétiques ou naturelles, tissées ou non tissées.

L'invention a aussi pour objet un procédé de préparation d'une peinture aqueuse caractérisé en ce qu'il comprend :
- Une étape A) de mélange d'une quantité efficace d'un concentré (C₂) tel que défini précédemment et d'au moins un agent liant ;
- Si nécessaire ou si désiré, une étape C) de broyage du mélange obtenu à l'issue de l'étape A), de façon à atteindre la granulométrie souhaitée des particules dispersées ; et
- Une étape B) d'addition successive d'ingrédients auxiliaires habituellement mis en oeuvre pour la préparation de peintures aqueuses, au mélange obtenu à l'issue de l'étape A) ou optionnellement de l'étape C).

Dans ledit procédé de préparation d'une peinture aqueuse tel que défini ci-dessus, l'étape A) et l'étape B) sont réalisées sous agitation par l'intermédiaire d'un agitateur mécanique de type Rayneri à une vitesse d'agitation, généralement comprise entre 100 tours/minute et 2000 tours/minutes, et à une température comprise entre 15°C et 60.

Si nécessaire, le procédé de préparation d'une peinture aqueuse objet de la présente invention peut comprendre une étape C) optionnelle de broyage du mélange obtenu à l'issue de l'étape A), de façon à atteindre une finesse des particules dispersées inférieure ou égale à 5 micromètres, mesurée par le moyen d'une jauge de North, selon les recommandations de la norme ISO 1524 2000. Cette étape C) optionnelle de broyage est généralement réalisée soit en lots soit en circulation ou en continu à l'aide des différents outils de broyage connus de l'homme du métier, comme les broyeurs à billes ou les broyeurs à disques ou les broyeurs à boulets ou les broyeurs cryogéniques.

Par « quantité efficace », on désigne dans la définition dudit procédé de préparation d'une peinture aqueuse tel que défini ci-dessus, une quantité telle que la peinture obtenue par ledit procédé :
- Confère un bon pouvoir opacifiant caractérisé par un ratio de contraste supérieur à 0,96 pour un feuil de 135 micromètres de ladite peinture, mesuré selon les dispositions des normes NFT 30.075 et NFT 30.076, et/ou
- Confère un aspect brillant à un feuil de ladite peinture caractérisé par une valeur de réflectance (ou valeur de brillant spéculaire) supérieure ou égale une valeur de 60 pour un angle d'incidence de 60°, mesurée selon les dispositions de la norme NF EN ISO 2813, ou
- Confère un aspect mat à un feuil de ladite peinture caractérisé par une valeur de réflectance (ou valeur de brillant spéculaire) inférieure ou égale à une valeur de 10 pour un angle d'incidence de 85°, mesurée selon les dispositions de la norme NF EN ISO 2813.

Par quantité efficace, on désigne notamment, dans la définition dudit procédé de préparation d'une peinture aqueuse tel que défini ci-dessus, une quantité dudit concentré (C₂) comprise entre 5% massique et 50% massique, plus particulièrement comprise entre 5% massique et 35% massique, pour 100% de la masse de ladite peinture aqueuse.

Par « agent liant», on désigne dans la définition dudit procédé de préparation d'une peinture aqueuse tel que défini ci-dessus, une substance chimique ou une composition chimique dont la fonction technique est d'assurer le lien entre l'ensemble des composants de la peinture aqueuse obtenue par la mise en oeuvre du procédé objet de l'invention. L'agent liant confère également à un feuil de peinture aqueuse le comprenant une rapidité de séchage et des propriétés de durcissement, de façon à ce que ledit feuil reste durablement sur le support sur lequel il a été formé.

Parmi les agents liants que l'on peut mettre en oeuvre dans ledit procédé de préparation d'une peinture aqueuse tel que défini ci-dessus, il y a notamment l'acétate de cellulose, les résines acryliques, les résines alkydes, le butyrate de cellulose, les résines époxydes, les éthers cellulosiques, les résines formo-phénoliques, les résines mélanine-formol (ou aminoplastes), la nitrocellulose, les polyamides, les polyesters, les résines polyester-uréthannes, les résines polyuréthanes, les silicones, les résines formol-urée, les résines vinyliques.

De façon générale, les peintures préparées par la mise en oeuvre dudit procédé de préparation d'une peinture aqueuse tel que défini ci-dessus, comportent en plus du concentré (C₂) et d'au moins un agent liant, des ingrédients auxiliaires habituellement mis en oeuvre pour la préparation de peintures aqueuses, comme des agents de charge, des agents épaississants, des agents de coalescence, des co-solvants, des agents de neutralisation, des agents anti-peaux, des agents anti-sédimentation, des catalyseurs de séchage, des agents dispersants, des agents d'étalement, des agents de matité, des agents de conservation, des agents protecteurs des rayonnements ultra-violets, des agents anti-mousse.

Parmi les agents de charge associés à la peinture obtenue selon le procédé objet de la présente invention, on peut citer les substances chimiques ou les compositions chimiques ayant pour fonction de modifier certaines caractéristiques mécaniques, chimiques ou rhéologiques de la peinture, comme les dérivés de sulfates, comme le sulfate de baryum, les dérivés de carbonate, comme le carbonate de calcium, la silice, les silicates, comme le kaolin, le talc, les micas, la bentonite, le silicate de calcium.

Parmi les agents épaississants associés à la peinture obtenue selon le procédé objet de la présente invention, on peut citer les éthers cellulosiques, les polyacrylates, les polyuréthannes, les gels de silices , la silice pyrogénée, les gommes d'origine végétale, comme la gomme de xanthane, la gomme de guar, la gomme d'agar-agar, la gomme d'acacia, le gomme de caroube, la gomme de tara.

Parmi les agents de coalescence associés à la peinture obtenue selon le procédé objet de la présente invention, on peut citer les substances chimiques ou les compositions chimiques ayant pour fonction d'abaisser la température de formation du film de ladite peinture, comme les dérivés de glycol tels que le méthyl glycol, l'éthyl glycol, l'acétate d'éthyl glycol, le butyl glycol, l'acétate de butyl glycol, l'hexyl glycol, le méthyl diglycol, le butyl diglycol, l'acétate de butyl diglycol ; les dérivés de propylèneglycol tels que le méthoxy propanol, l'acétate de méthoxy propanol, l'éthoxy propanol, l'acétate d'éthoxy propanol, l'isobutoxy propanol, le méthoxy propoxy propanol, l'isobutoxy propoxy propanol ; les diols tels que l'hexylèneglycol, le propylèneglycol ; les hydrocarbures.

Parmi les agents de neutralisation associés à la peinture obtenue selon le procédé objet de la présente invention, on peut citer les substances chimiques ou les compositions chimiques ayant pour fonction d'améliorer la solubilité des liants dans l'eau et d'améliorer la stabilité des peintures aqueuses, comme la monoéthanolamine, la monoisopropanolamine, le 2-amino-2-méthyl-1-propanol, la diéthylamine, la morpholine, le diéthanolamine, la triméthylamine, la triéthylamine, la N,N-diméthyl éthonolamine, la triéthanolamine, la N,N-diéthyl éthanolamine, la N-méthyl diéthanolamine, la N-éthyl diéthanolamine, le 2-diméthylamino-2-méthyl-1-propanol.

Parmi les agents anti-peaux associés à la peinture obtenue selon le procédé objet de la présente invention, on peut citer le méthyl éthylcétoxime, le butylraldoxime, l'heptanaldoxime, le cyclohexanoxime.

Parmi les agents catalyseurs de séchage associés à la peinture obtenue selon le procédé objet de la présente invention, on peut citer des agents siccatifs comme les naphténates ou les octoates de cobalt, de manganèse, de calcium ; les catalyseurs acides comme l'acide paratoluène sulfonique, l'acide phosphorique.

Parmi les agents dispersants associés à la peinture obtenue selon le procédé objet de la présente invention, on peut citer le polyphosphate de sodium, les phosphates organiques, les polyols de hauts poids moléculaires, les sels d'acides polycarboxyliques, les polynaphtyl-méthanes sulfonates de sodium ou d'ammonium.

Parmi les agents d'étalement associés à la peinture obtenue selon le procédé objet de la présente invention, on peut citer les éthers de glycol, les esters de glycol, les huiles siliconées, les dérivés fluorés, les polymères acryliques.

Parmi les agents de conservation associés à la peinture obtenue selon le procédé objet de la présente invention, on peut citer les substances chimiques ou les compositions chimiques ayant pour fonction de prévenir la contamination bactérienne ou fongique. Comme exemple d'agents de conservation, on peut citer les agents biocides comme le pentachlorophénate de sodium, le pentachlorophénol, le chloracétamide, les dithiocarbamates, les dérivés chlorés ou fluorés de thiophtalimide, les dérivés d'isothiazolinone, les dérivés générant la formation de formol *in-situ,* les para-hydroxy benzoate d'alkyle comme le 4-hydroxy benzoate de méthyle, le 4-hydroxy benzoate d'éthyle, le 4-hydroxy benzoate de propyle, le 4-hydroxy benzoate d'isopropyle, le 4-hydroxy benzoate de butyle, le 4-hydroxy benzoate d'isobutyle, le 4-hydroxy benzoate de benzyle, le phénoxyéthanol, le phenoxypropanol.

Parmi les agents protecteurs du rayonnement ultra-violet associés à la peinture obtenue selon le procédé objet de la présente invention, on peut citer les dérivés de la benzophénone, les dérivés de benzotriazole, les dérivés de triazines, les salicylates.

Parmi les agents anti-oxydants associés à la peinture obtenue selon le procédé objet de la présente invention, on peut citer les dérivés phénoliques bloqués, les amines telle que la N,N'-diphényl phénylène-1,4-diamine, les mercapatans, les disulfures organiques, le thiobisphénol, les dithiocarbamates de dialkyle.

Parmi les agents anti-mousses associés à la peinture obtenue selon le procédé objet de la présente invention, on peut citer par exemple les dérivés d'huiles de silicone, plus particulièrement les polyméthylsiloxanes, et les polysiloxanes modifiés par des polyéthers.

La peinture aqueuse obtenue selon le procédé objet de la présente invention peut être appliquée sur la surface dure à revêtir par les moyens connus de l'homme du métier, à savoir par l'intermédiaire d'un rouleau, d'un brosse, d'un pinceau, par pulvérisation, par l'intermédiaire de machines à rideau, par l'intermédiaire de machines à cylindres, par trempe, par électrophorèse, par cataphorèse, par anaphorèse.

L'invention a aussi pour objet un procédé de préparation d'une encre aqueuse caractérisé en ce qu'il comprend :
- Une étape A₁) de mélange d'une quantité efficace d'un concentré (C₂) tel que défini précédemment et d'au moins une résine ;
- Si nécessaire ou si désiré, une étape C₁) de broyage du mélange obtenu à l'issue de l'étape A₁), de façon à atteindre la granulométrie souhaitée des particules dispersées ; et
- Une étape B₁) d'addition successive d'ingrédients auxiliaires habituellement mis en oeuvre pour la préparation d'encres aqueuses, au mélange obtenu à l'issue de l'étape A₁) ou optionnellement de l'étape C₁).

Dans ledit procédé de préparation d'une peinture aqueuse tel que défini ci-dessus, l'étape A₁) et l'étape B₁) sont réalisées sous agitation par l'intermédiaire d'un agitateur mécanique de type Rayneri à une vitesse d'agitation, généralement comprise entre 100 tours/minute et 2000 tours/minutes, et à une température comprise entre 15°C et 60.

Si nécessaire, le procédé de préparation d'une encre aqueuse objet de la présente invention peut comprendre une étape C₁) optionnelle de broyage du mélange obtenu à l'issue de l'étape A₁), de façon à atteindre une finesse des particules dispersées inférieure ou égale à 5 micromètres, mesurée par le moyen d'une jauge de North, selon les recommandations de la norme ISO 1524 2000. Cette étape C₁) optionnelle de broyage est généralement réalisée soit en lots soit en circulation ou en continu à l'aide des différents outils de broyage connus de l'homme du métier, comme les broyeurs à billes ou les broyeurs à disques ou les broyeurs à boulets ou les broyeurs cryogéniques.

Par « quantité efficace », on désigne dans la définition dudit procédé de préparation d'une encre aqueuse tel que défini ci-dessus, une quantité du concentré (C₂) telle, que l'encre aqueuse obtenue confère au film d'encre appliqué sur le support d'impression :
- Les propriétés colorimétriques (teinte dominante, puissance de la couleur, fraîcheur de la couleur) souhaitées,
- Un pouvoir couvrant optimal de la surface du support d'impression, et
- Une stabilité de la couleur et de la teinte à la lumière, à la chaleur et aux différents agents chimiques polluants extérieurs.

Par quantité efficace, on désigne notamment dans la définition dudit procédé de préparation d'une encre aqueuse tel que défini ci-dessus, une quantité de concentré (C₂), comprise entre 25% massique et 95% massique, plus particulièrement comprise entre 25% massique et 55% massique, pour 100% de la masse de ladite encre aqueuse.

Par « résine», on désigne dans la définition dudit procédé de préparation d'une encre aqueuse tel que défini ci-dessus, une substance chimique ou une composition chimique dont la fonction technique est d'assurer la liaison entre les pigments et le support, de conférer au film d'encre, ses propriétés mécaniques (souplesse, brillant du film), de conférer à l'encre la comprenant, ses propriétés rhéologiques.

Comme exemples de résines que l'on peut mettre en oeuvre dans dudit procédé de préparation d'une encre aqueuse tel que défini ci-dessus, il y a les polymères acryliques, les homopolymères de l'acide acrylique et/ou leur sel de sodium, de potassium, d'ammonium, les homopolymères de l'acide acrylique totalement ou partiellement neutralisé par des amines comme la monoéthanolamine ou la triéthanolamine, les polymères polyester-polyacryliques se présentant sous la forme d'une émulsion, les polymères polyuréthannes-polyacryliques se présentant sous la forme d'une émulsion.

La quantité de résine généralement mise en oeuvre dans ledit procédé de préparation d'une encre aqueuse tel que défini ci-dessus, est généralement comprise entre 5% massique et 75% massique, pour 100% de la masse de ladite encre aqueuse.

De façon générale, les encres aqueuses préparées par la mise en oeuvre du procédé objet de la présente invention comportent en plus du concentré (C2) et d'au moins une résine, des ingrédients habituellement mis en oeuvre pour la préparation d'encres aqueuses, comme des agents anti-mousses, des agents de conservation, des agents stabilisants, des agents d'amélioration de séchage, des agents séquestrant, des agents antioxydants, des agents modificateurs de rhéologie, des agents de charge.

Parmi les agents anti-mousses associés à l'encre aqueuse obtenue selon ledit procédé de préparation d'une encre aqueuse tel que défini ci-dessus, il y a par exemple les dérivés d'huiles de silicone, comme les polyméthylsiloxanes et les polysiloxanes modifiés par des polyéthers.

Parmi les agents de conservation associés à l'encre aqueuse obtenue selon ledit procédé de préparation d'une encre aqueuse tel que défini ci-dessus, il y a par exemple le pentachlorophénate de sodium, le pentachlorophénol, le chloracétamide, les dithiocarbamates, les dérivés chlorés ou fluorés de thiophtalimide, les dérivés d'isothiazolinone, les dérivés générant la formation de formol *in-situ,* les para-hydroxy benzoate d'alkyle comme le 4-hydroxy benzoate de méthyle, le 4-hydroxy benzoate d'éthyle, le 4-hydroxy benzoate de propyle, le 4-hydroxy benzoate d'isopropyle, le 4-hydroxy benzoate de butyle, le 4-hydroxy benzoate d'isobutyle, le 4-hydroxy benzoate de benzyle, le phénoxyéthanol, le phenoxy propanol.

Parmi les agents stabilisants associés à l'encre aqueuse obtenue selon ledit procédé de préparation d'une encre aqueuse tel que défini ci-dessus, il y a par exemple les amines telles que la monoéthanolamine, la monoisopropanolamine, le 2-amino-2-méthyl-1-propanol, la diéthylamine, la morpholine, le diéthanolamine, la triméthylamine, la triéthylamine, la N,N-diméthyl éthonolamine, la triéthanolamine, la N,N-diéthyl éthanolamine, la N-méthyl diéthanolamine, la N-éthyl diéthanolamine, le 2-diméthylamino-2-méthyl-1-propanol.

Parmi les agents d'amélioration de séchage associés à l'encre aqueuse obtenue selon ledit procédé de préparation d'une encre aqueuse tel que défini ci-dessus, il,y a les agents siccatifs comme des sels métalliques d'acides gras, les linoléates de cobalt ou de magnésium, les octoates de zirconium, de cobalt ou de manganèse, des alcools volatils comme l'éthanol, le propanol-1, l'isopropanol, le butanol-1.

Parmi les agents séquestrants associés à l'encre aqueuse obtenue selon ledit procédé de préparation d'une encre aqueuse tel que défini ci-dessus, il y a par exemple l'acide éthylènediamine tétracétique (EDTA) et son sel de calcium ou de sodium, le gluconate de sodium, l'érythorbate de sodium.

Parmi les agents antioxydants associés à l'encre aqueuse obtenue selon ledit procédé de préparation d'une encre aqueuse tel que défini ci-dessus, il y a par exemple des oximes, comme le méthyléthylcétoxime, la cyclohexanone oxime ; des dérivés du phénol comme le butylhydroxytoluène ; des amines aromatiques ; des quinones comme l'hydroquinone.

Parmi les agents de charge associés à l'encre aqueuse obtenue selon ledit procédé de préparation d'une encre aqueuse tel que défini ci-dessus, il y a par exemple les carbonates, comme le carbonate de calcium, la silice, les silicates, le kaolin, le talc, les micas, la bentonite ou le silicate de calcium.

L'encre aqueuse obtenue selon le procédé objet de la présente invention peut être appliquée sur le support à impression selon les techniques d'héliogravure et de flexographie connues de l'homme du métier ; ledit support à impression étant du papier, du carton, du carton ondulé, un film plastique comme un film de polyéthylène destiné à des emballages flexibles.

Les exemples suivants illustrent l'invention, sans toutefois la limiter.

### A - Préparation d'une composition comprenant de l'octyl polyglucoside et du n-décyl polyglucoside.

On introduit 2,7 équivalents molaires d'un mélange (M₁) constitué pour 100% de sa masse de 45% massique de n-octanol et de 55% massique de n-décanol dans un réacteur à double enveloppe, dans laquelle circule un fluide caloporteur, et muni d'une agitation efficace, à une température de 80°C. Un équivalent molaire de glucose anhydre est alors ajouté progressivement au milieu réactionnel pour permettre sa dispersion homogène, puis 0,15 % massique d'acide sulfurique à 98% pour 100% de la masse constituée par la somme de la masse du glucose et de la masse du mélange d'alcool (M₁) sont introduits dans la dispersion homogène préalablement préparée. Le milieu réactionnel est placé sous un vide partiel d'environ 180 mbar, et maintenu à une température de 100°C-105°C pendant une durée de 4 heures avec évacuation de l'eau formée au moyen d'un montage de distillation. Le milieu réactionnel est ensuite refroidi à 85°C-90°C et neutralisé par ajout de soude à 40%, pour amener le pH d'une solution à 5% de ce mélange à une valeur d'environ 7,0. Le milieu réactionnel ainsi obtenu est ensuite vidangée à une température de 70°C et filtré pour éliminer les grains de glucose n'ayant pas réagi. Le filtrat est ensuite introduit dans un réacteur en verre à double enveloppe, dans laquelle circule un fluide caloporteur, muni d'une agitation efficace et d'un dispositif de distillation. L'excès du mélange d'alcool (M₁) est ensuite éliminé par distillation en utilisant un évaporateur film couche mince réglé à une température de paroi d'environ 220°C sous vide partiel compris entre environ 5 mbar et 15 mbar. Le milieu réactionnel ainsi distillé est aussitôt dilué par l'ajout d'une quantité d'eau de façon à atteindre une concentration en milieu réactionnel d'environ 55%. Après homogénéisation pendant 30 minutes à une température de 50°C, la composition (X₁) obtenue est vidangée. La composition (X₁) comprend 45% d'eau et 55% du mélange de n-octyl polyglucoside et de n-décyl polyglucoside, avec une proportion massique n-octyl polyglucoside/n-décyl polyglucoside de 45/55.

### B- Préparation et évaluation de concentrés aqueux pigmentaires comprenant des pigments organiques

### B₁ - Préparation de concentrés aqueux comprenant des pigments organiques

Chacun des concentrés pigmentaires est préparé en utilisant un mélangeur-homogénéisateur de marque DISPERMAT™CV commercialisé par la société VMA Getz-mann, muni d'une agitation mécanique de type défloculeuse selon le même mode opératoire suivant :
- La quantité d'eau souhaitée est Introduite dans une cuve en acier inox adaptée au mélangeur et possédant une double enveloppe dans laquelle circule un fluide caloporteur à une température thermostatée de 20°C ;
- La moitié de la quantité de l'agent anti-mousse, ainsi que le système tensioactif sont introduits dans la cuve comprenant l'eau, et le mélange obtenu est ensuite agité pendant une durée de 10 minutes sous agitation, avec une vitesse d'agitation de 500 tours/minute ;
- La quantité souhaitée de pigment est ensuite ajoutée dans la cuve, et le mélange en résultant est homogénéisé à 20°C sous agitation, à une vitesse de 500 tours/minute pendant 10 minutes ;
- L'agitation est ensuite arrêtée, et on introduit dans la cuve un volume de billes de broyage égal au volume du mélange présent dans la cuve ; les billes de broyage utilisées sont des billes de broyage de marque « YTZ grinding Media » de 0,8 millimètres commercialisées par la société TOSOH ;
- La cuve comprenant le mélange d'eau, d'anti-mousse, de tensioactif et de bille de broyage, est ensuite adaptée de façon étanche au mélangeur, et le mélange est agité pendant une durée d'une heure à une vitesse de 2.000 tours/minute et à une température de 20°C ;
- Le concentré obtenu est séparé des billes de broyage, la seconde moitié de la quantité souhaitée d'agent anti-mousse ajoutée, puis le mélange en résultant est conditionné dans un flacon de volume adapté ;
- Une mesure de finesse des particules dispersées est alors réalisée à l'aide d'une jauge de North de 0 à 50 micromètres, commercialisée par la société Touzart Matignon, selon les recommandations de la norme ISO 1524 2000.

### B₂- Evaluation des concentrés aqueux comprenant des pigments organiques

Les compositions massiques des concentrés (F₁), (F₂), (F₃), (F₄) et (F₅) ainsi obtenues sont consignées dans le tableau 1 ci-dessous.

**Tableau 1**

| | (F₁) | (F₂) | (F₃) | (F₄) | (F₅) |
|---|---|---|---|---|---|
| Pigment : | | | | | |
| Fastogen Blue 5380E⁽¹⁾ | 55% | 50% | 45% | 55% | 55% |

| Tensioactif : | | | | | |
|---|---|---|---|---|---|
| Composition (X₁) en extrait sec | 6,05% | 5,9% | 5,5% | 6,05% | 6,05% |
| Carbowax™ PEG400⁽²⁾ | 0% | 0% | 0% | 18,75% | 8,8% |

| Anti-mousse : | | | | | |
|---|---|---|---|---|---|
| EROL AMP 587⁽³⁾ | 1% | 1% | 1% | 1% | 1% |
| Eau | 37,95% | 43,1% | 48,7% | 19,2% | 29,15% |

| | | | | | |
|---|---|---|---|---|---|
| (1) « Fastogen Blue 5380E » : pigment organique de la famille des phtalocyanines bleues, dont la référence dans le « Color Index » est « Pigment Blue 15:3 », commercialisé par la société SUNCHEMICAL. (2) :Carbowax™PEG 400 est un polyéthylène glycol de poids moléculaire de 400 g.mol⁻¹, commercialisé par la société Dow Chemical. (3) EROL™ AMP 587 : agent anti-mousse non siliconé commercialisé par la société Gamma Chimica | | | | | |

La stabilité des concentrés (F₁), (F₂), (F₃), (F₄) et (F₅) est évaluée comme suit :
- Une proportion identique de la quantité de chaque concentré a été conservée dans une enceinte climatique isolée et régulée à une température de 20°C pendant une durée de 3 mois. L'aspect de chaque concentré a été noté après une durée d'un jour, de sept jours et de trois mois de conservation dans ces conditions ;
- La viscosité dynamique (en mPas) de chaque concentré a été mesurée au moyen d'un viscosimètre Brookfield LVT à une vitesse de 60 tours/minute et à une température de 20°C après une durée d'un jour, de sept jours et de trois mois de conservation dans les conditions décrites ci-dessus.
- La finesse est mesurée à la jauge de North (en micromètre).

Les résultats obtenus et observés sont consignés dans le tableau 2 ci-dessous.

**Tableau 2**

| | (F₁) | (F₂) | (F₃) | (F₄) | (F₅) |
|---|---|---|---|---|---|
| Aspect à 20°C : | | | | (P*) | (P*) |
| - après 1 jour | (H*) | (H*) | (H*) | | |
| - après 7 jours | (H*) | (H*) | (H*) | | |
| - après 3 mois | (H*) | (H*) | (H*) | | |
| Viscosité après 1 jour à 20°C | 640 | 142 | 52 | n.m. | n.m. |
| Viscosité après 7 jour à 20°C | 620 | 142 | 58 | n.m. | n.m. |
| Viscosité après 3 mois à 20°C | 580 | 142 | 55 | n.m. | n.m. |
| Finesse | 8 µm | 8 µm | 8 µm | n.m. | n.m. |

Homogène (H*) : Absence de dépôts et de sédiments dans le fond du flacon comprenant le concentré concerné.
(P*) : Prise en masse lors de la préparation du concentré
n.m : non mesuré.

Ces résultats font apparaître que les concentrés pigmentaires aqueux selon l'invention (F₁), (F₂) et (F₃) se caractérisent par une grande stabilité, et ne montrent pas après un stockage de 3 mois la présence de dépôts ou de sédiments des pigments dispersés. de plus, leur viscosité dynamique de ces concentrés selon l'invention, mesurée par l'intermédiaire d'un viscosimètre Brookfield LVT à une vitesse de 60 tours/minute à 20°C, reste stable après une durée de stockage de 3 mois à 20°C. En effet :
- Pour une concentration massique en pigment de 45% (concentré (F₃)) et de 50% (concentré (F₂), les viscosités mesurées après 3 mois de stockage à 20°C restent identiques ou similaires aux viscosités mesurées après un jour de stockage dans ces mêmes conditions ;
- Pour une concentration massique en pigment de 55% (concentré (F₁)), la viscosité dynamique mesurée après 3 mois de stockage à 20°C diminue de 9,3%, soit une proportion inférieure à 20%, tout en restant stable, et en ne présentant pas de sédimentation, ce qui constitue une évolution acceptable pour l'usage des utilisateurs de tels concentrés pigmentaires.

Les concentrés comparatifs (F₄) et (F₅) comprenant du PEG 400 ne peuvent pas être préparés et évalués du fait de leur prise en masse.

### C- Préparation et évaluation de concentrés aqueux pigmentaires comprenant des pigments inorganiques

### C₁- Préparation d'un concentré aqueux des pigments inorganiques

Le procédé de préparation décrit dans le paragraphe B₁) est mis en oeuvre pour préparer un concentré pigmentaire (F₆) dont les proportions massiques de ses constituants sont indiquées dans le tableau 3 ci-dessous.

**Tableau 3**

| | **(F₆)** |
|---|---|
| Pigment : Dioxyde de Titane | 70% |
| Tensioactif : Composition (X₁) en extrait sec | 3,15% |
| Anti-mousse : EROL AMP 587⁽³⁾ | 1% |
| Eau | 25,85% |

### C₂ - Evaluation d'un concentré aqueux comprenant des pigments inorganiques

La stabilité du concentré (F₆) est évaluée comme suit :
- Une proportion identique de la quantité du concentré (F₆) a été conservée dans une enceinte climatique isolée et régulée à une température de 20°C pendant une durée de 3 mois. L'aspect du concentré (F₆) a été noté après une durée d'un jour, de sept jours et de trois mois de conservation dans ces conditions ;
- La viscosité dynamique (en mPas) du concentré (F₆) a été mesurée au moyen d'un viscosimètre Brookfield LVT à une vitesse de 60 tours/minute et à une température de 20°C après une durée d'un jour, de sept jours et de trois mois de conservation dans les conditions décrites ci-dessus.
- La finesse est mesurée à la jauge de North (en micromètre).

Les résultats obtenus et observés sont consignés dans le tableau 4 ci-dessous.

**Tableau 4**

| | **(F6)** |
|---|---|
| Aspect à 20°C : | |
| - après 1 jour | (H*) |
| - après 7 jours | (H*) |
| - après 3 mois | (H*) |
| Viscosité après 1 jour à 20°C | 460 |
| Viscosité après 7 jours à 20°C | 440 |
| Viscosité après 3 mois à 20°C | 360 |
| Finesse | 8µm |

Ils font apparaître que le concentré pigmentaire aqueux selon l'invention (F₆) se caractérise par une grande stabilité, et ne montre pas après un stockage de 3 mois la présence de dépôts ou de sédiments des pigments. De plus, la viscosité dynamique de ce concentré (F₆), reste stable après une durée de stockage de 3 mois à 20°C.

### D - Exemples de formulations

### Peinture pour bois qui peut être diluée dans de l'eau.

| Ingrédients | Proportion massique |
|---|---|
| Resydrol™ AW 6120 ⁽⁴⁾ | 35% |
| Texanol™ ⁽⁵⁾ | 3% |
| Concentré (F₁) | 40 % |
| Aerosil™200 ⁽⁶⁾ | 0.2 % |
| Parmetol™ A 26 ⁽⁷⁾ | 0.5% |
| Eau | 21,3% |

| | |
|---|---|
| (4) Le Resydrol™ AW 6120 est un liant de type alkyde se présentant sous la forme d'une émulsion, commercialisé par la société Cytec. (5) Le Texanol™ est un agent de coalescence de type ester d'alcool commercialisé par la société Eastman. (6) L'Aérosil 200 est un agent épaississant de type silice pyrogénée commercialisé par la société Degussa. (7) Le Parmetol™ A 26 est un agent conservateur commercialisé par la société Schülke & Mayr. | |

### Mode opératoire :

Chaque ingrédient, à l'exception de l'agent épaississant et de l'agent conservateur, est introduit successivement dans une cuve de mélange sous agitation mécanique modérée, à température ambiante, jusqu'à l'obtention d'une composition homogène et limpide. L'agitation est maintenue pendant 30 minutes à 25°C puis l'agent conservateur et l'agent épaississant sont introduits progressivement à 25°C sous agitation.

### Formulation pour héliogravure

| Ingrédients | Proportion massique |
|---|---|
| Joncryl™ 77 ⁽⁸⁾ | 20% |
| Texanol ⁽⁵⁾ | 4% |
| Concentré (F₁) | 30% |
| Parmetol™ A 26 ⁽⁷⁾ | 0,5% |
| Eau | 45,5% |

| | |
|---|---|
| () Le Joncryl™ 77 est un liant de type acrylique en émulsion commercialisé par la société BASF. | |

### Mode opératoire :

Chaque ingrédient, à l'exception de l'agent conservateur, est introduit successivement dans une cuve de mélange sous agitation mécanique modérée, à température ambiante, jusqu'à l'obtention d'une composition homogène et limpide. L'agitation est maintenue pendant 30 minutes à 25°C puis l'agent conservateur est introduit progressivement à 25°C sous agitation.

## Revendications

1. Concentré (C₂) comprenant pour 100% de sa masse :
- De 30% à 85% massique d'au moins un pigment particulaire solide ;
- De 3% à 10% massique d'un système tensioactif (T_{A}) consistant en une composition (C₁) ou en un mélange de compositions (C₁), ladite composition (C₁) étant représentée par la formule (I) :
R₁-O-(G₁)ₚ-H (I)
dans laquelle R₁ représente un radical aliphatique linéaire ou ramifié, saturé ou insaturé, comportant de 8 à 14 atomes de carbone, G₁ représente le reste d'un sucre réducteur et p représente un nombre décimal supérieur ou égal à 1,05 et inférieur ou égal à 5, ladite composition (C₁) consistant en un mélange de composés représentés par les formules (I₁), (I₂), (I₃), (I₄) et (I₅)
R₁-O-(G₁)₁-H (I₁)
R₁-O-(G₁)₂-H (I₂)
R₁-O-(G₁)₃-H (I₃)
R₁-O-(G₁)₄-H (I₄)
R₁-O-(G₁)₅-H (I₅),
dans les proportions molaires respectives a₁, a₂, a₃, a₄ et a₅, telles que la somme a₁+ a₂ + a₃ + a₄ + a₅ est égale à 1 et que la somme a₁ + 2a₂ + 3a₃ + 4a₄ + 5a₅ est égale à p ;
- Et de 5% à 67% massique d'eau,
étant entendu que la composition (C₂) ne comprend pas de polyéthylène glycol de poids moléculaire moyen supérieur ou égal à 190 g/mol et inférieur ou égal à 700 g/mol, et que la composition (C₂) ne comprend pas d'alcoxylate de dimerdiol.

2. Concentré (C₂) tel que défini à la revendication 1, **caractérisé en ce que** dans la formule (I) ledit reste G₁ est choisi parmi les restes du glucose, du xylose et de l'arabinose, et p représente un nombre décimal supérieur ou égal à 1,05 et inférieur ou égal à 2,5.

3. Concentré (C₂) tel que défini à l'une ou quelconque des revendications 1 ou 2, **caractérisé en ce que** dans la formule (I), R₁ est choisi parmi les radicaux (2-éthyl) hexyle, n-octyle, n-décyle, n-dodécyle ou n-tétradécyle.

4. Concentré (C₂) tel que défini à l'une ou quelconque des revendications 1 à 3, **caractérisé en ce que** le système tensioactif (T_{A}) consiste pour 100% de sa masse en un mélange :
- De 40% à 60% massique d'une composition (C₁) représentée par la formule (I) dans laquelle R₁ représente le radical n-octyle,
- De 60% à 40% massique d'une composition (C₁) représentée par la formule (I) dans laquelle R₁ représente le radical n-décyle.

5. Concentré (C₂) tel que défini à l'une ou quelconque des revendications 1 à 4, **caractérisé en ce que** la surface spécifique dudit pigment particulaire solide est supérieure ou égale à 10,0m²/g et inférieure ou égale à 150,0m²/g.

6. Concentré (C₂) tel que défini à l'une ou quelconque des revendications 1 à 5, **caractérisé en ce que** la masse volumique dudit pigment particulaire solide est supérieure ou égale à 1,1g/cm³ et inférieure ou égale à 4,5g/cm³

7. Concentré (C₂) tel que défini à l'une ou quelconque des revendications 1 à 6, **caractérisé en ce que** sa viscosité dynamique mesurée au moyen d'un viscosimètre Brookfield LVT à une vitesse de 60 tours/minute et à une température de 20°C est supérieure ou égale à 50 mPas et inférieure ou égale à 2.000 mPas.

8. Utilisation du concentré (C₂) tel que défini à l'une ou quelconque des revendications 1 à 7, comme base colorante pour préparer des matériaux de revêtement de surfaces dures, de supports textiles ou de supports en papier.

9. Procédé de préparation d'une peinture aqueuse **caractérisé en ce qu'**il comprend :
- Une étape A) de mélange d'une quantité efficace du concentré (C₂) tel que défini à l'une quelconque des revendications 1 à 7, et d'au moins un agent liant ;
- Si nécessaire ou si désiré, une étape C) de broyage du mélange obtenu à l'issue de l'étape A), de façon à atteindre la granulométrie souhaitée des particules dispersées ; et
- Une étape B) d'addition successive d'ingrédients auxiliaires habituellement mis en oeuvre pour la préparation de peintures aqueuses, au mélange obtenu à l'issue de l'étape A) ou optionnellement de l'étape C).

10. Procédé de préparation d'une encre aqueuse **caractérisé en ce qu'**il comprend :
- Une étape A₁) de mélange d'une quantité efficace du concentré (C₂) tel que défini à l'une quelconque des revendications 1 à 7, et d'au moins une résine ;
- Si nécessaire ou si désiré, une étape C₁) de broyage du mélange obtenu à l'issue de l'étape A₁), de façon à atteindre la granulométrie souhaitée des particules dispersées ; et
- Une étape B₁) d'addition successive d'ingrédients auxiliaires habituellement mis en oeuvre pour la préparation d'encres aqueuses, au mélange obtenu à l'issue de l'étape A₁) ou optionnellement de l'étape C₁).
